# EUROPEAN PATENT APPLICATION

(11) **EP 3 744 795 A1**
(43) Date of publication of application: **02.12.2020**
(21) Application number: 19744434.2
(22) Date of filing: 23.01.2019
(51) Int. Cl.: C09D 4/02, B32B 27/36, B32B 27/38, C09D 163/00

(54) **RESIN COMPOSITION FOR FORMING HARD COATING LAYER**

(30) Priority: 24.01.2018 JP 2018009929; 09.11.2018 JP 2018211263
(71) Applicant: Daicel Corporation, Osaka 530-0011 (JP)
(72) Inventor: EGAWA, Tomoya, Tokyo 108-8230 (JP); HORIUCHI, Junpei, Tokyo 108-8230 (JP)
(74) Representative: Grünecker Patent- und Rechtsanwälte PartG mbB
(86) International application number: PCT/JP2019/002130
(87) International publication number: WO 2019/146659

(57) **Abstract**

Provided is a resin composition for forming a hard coating layer, which is capable of forming a cured product having not only high hardness but also excellent scratch resistance, bending resistance, and crack resistance. The resin composition according to an embodiment of the present invention contains components (A) to (D) below: the component (A): a tri- or higher-functional alicyclic epoxy compound and/or a tri- or higher-functional oxetane compound; the component (B): a polyfunctional (meth)acrylic compound; the component (C): a photocationic polymerization initiator; and the component (D): a photoradical polymerization initiator.

## Description

### Technical Field

The present invention relates to a resin composition for forming a hard coating layer, and a hard coating film, an electronic device, and a molded product including a hard coating layer formed of a cured product of the resin composition. The present application claims priority to JP 2018-009929 filed in Japan on January 24, 2018 and JP 2018-211263 filed in Japan on November 9, 2018, the contents of which are incorporated herein.

### Background Art

A hard coating film is adhered to touch screens and displays of electronic devices, such as liquid crystal televisions, liquid crystal displays, notebook-size personal computers, mobile displays, tablet PCs, and smartphones, the hard coating film including a hard coating layer with high surface hardness and scratch resistance, thus imparting effects of preventing a scratch on a screen, preventing a fingerprint on a screen, and facilitating wiping off dirt attached on a screen. In addition, lenses and sensors are provided with a hard coating layer to prevent scratches on a surface and maintain performances. Additionally, application of a hard coating layer is also considered for interior components, exterior components, electrical components, windshields, and the like of automobiles to maintain appearance and prevent decrease in transmittance. Furthermore, in recent years, further enhancement of scratch resistance and surface hardness of a hard coating layer has been demanded.

Examples of a method known in the art for improving scratch resistance of a hard coating layer includes a method of blending inorganic particles of alumina, silica, titanium oxide, or the like in a resin, that is, a method called organic-inorganic hybrid (Patent Documents 1 to 3, etc.).

In addition, a widely used means of improving the surface hardness of a hard coating layer is polyfunctionalization of a resin for forming the hard coating layer. Patent Document 4 describes a resin composition containing a tri- or higher-functional radically polymerizable compound and a bifunctional alicyclic epoxy compound. Patent Document 5 describes a resin composition containing a polyfunctional urethane (meth)acrylate and a (meth)acrylic-based copolymer resin.

### Citation List

### Patent Document

Patent Document 1: JP 02-060696 B
Patent Document 2: JP 2005-076005 A
Patent Document 3: JP 2003-034761 A
Patent Document 4: JP 08-073771 A
Patent Document 5: JP 2006-316249 A

### Summary of Invention

### Technical Problem

However, the method of blending inorganic particles in a resin and the method of polyfunctionalization of a resin improve the scratch resistance and surface hardness of the hard coating layer but on the other hand have a drawback in that the cured product becomes brittle with increasing hardness. In addition, it has turned out that difference in the coefficient of thermal expansion between the cured product and a substrate is large, and thus a crack due to a stress of cure shrinkage is apt to occur in the hard coating layer when a thermal shock is applied to the hard coating layer or when the thickness of the hard coating layer is increased. Furthermore, it has turned out to be difficult for a cured product of the composition containing a tri- or higher-functional radically polymerizable compound and a bifunctional epoxy compound to achieve both scratch resistance and crack resistance (e.g., Comparative Examples 1 and 2 of the present application). Moreover, the cured product of the composition containing a polyfunctional urethane (meth)acrylate and a (meth)acrylic-based copolymer resin exhibits a high curling property, and thus when such a composition is coated on a film, it is necessary to coat the composition on both sides or use a thick substrate. Still more, such a coated product has turned out to have drawbacks in that the coating layer cannot follow the bending of the film, thus resulting in crack formation (bending resistance is insufficient), and the coating layer with an increased thickness has a crack formed when a thermal shock is applied thereto (crack resistance is insufficient).

Thus, an object of the present invention is to provide a resin composition for forming a hard coating layer, which is capable of forming a cured product having not only high hardness but also excellent scratch resistance, bending resistance, and crack resistance.

Another object of the present invention is to provide a hard coating film, an electronic device, and a molded product including a hard coating layer having not only high hardness but also excellent scratch resistance, bending resistance, and crack resistance.

### Solution to Problem

As a result of diligent research to solve the problems described above, the present inventor found that irradiation with an active energy ray to a resin composition containing a tri- or higher-functional alicyclic epoxy compound, a polyfunctional (meth)acrylic compound, a photocationic polymerization initiator, and a photoradical polymerization initiator provides a cured product having not only high hardness but also excellent scratch resistance, bending resistance, and crack resistance. The present invention was completed based on these findings.

That is, an embodiment of the present invention provides a resin composition for forming a hard coating layer, the resin composition containing components (A) to (D) below:
the component (A): a tri- or higher-functional alicyclic epoxy compound and/or a tri- or higher-functional oxetane compound;
the component (B): a polyfunctional (meth)acrylic compound;
the component (C): a photocationic polymerization initiator; and
the component (D): a photoradical polymerization initiator.

A content of the component (A) according to an embodiment of the present invention is preferably from 1 to 75 wt.% of a total amount of curable compounds contained in the resin composition.

The component (A) according to an embodiment of the present invention preferably contains, as the tri- or higher-functional alicyclic epoxy compound, at least one selected from the group consisting of:
a compound represented by Formula (a-3) below 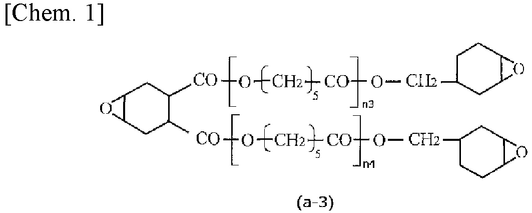 where n3 and n4 each are identical or different and represent an integer of 1 to 30;
a compound represented by Formula (a-4) below 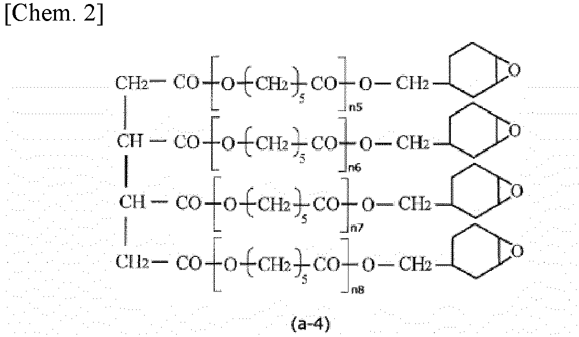 where n5, n6, n7, and n8 each are identical or different and represent an integer of 1 to 30; and
a compound represented by Formula (a') below 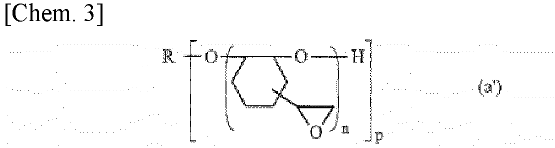 where R is a group (p-valent organic group) obtained by removing p hydroxy groups (-OH) from a structural formula of a p-hydric alcohol, and p and n each represent a natural number.

An embodiment of the present invention also provides a hard coating film including a hard coating layer formed of a cured product of the resin composition for forming a hard coating layer.

An embodiment of the present invention also provides an electronic device including a hard coating layer formed of a cured product of the resin composition for forming a hard coating layer.

An embodiment of the present invention also provides a molded product including a hard coating layer formed of a cured product of the resin composition for forming a hard coating layer.

### Advantageous Effects of Invention

The resin composition for forming a hard coating layer according to an embodiment of the present invention has the above constitution and thus is capable of forming a hard coating layer having not only high hardness but also excellent scratch resistance, bending resistance, and crack resistance by irradiation with an active energy ray.

In addition, use of the resin composition for forming a hard coating layer according to an embodiment of the present invention can provide a hard coating film, a molded product, and an electronic device including a hard coating layer having not only high hardness but also excellent scratch resistance, bending resistance, and crack resistance.

### Description of Embodiments

A resin composition for forming a hard coating layer according to an embodiment of the present invention (which may be hereinafter referred to simply as "the resin composition") contains components (A) and (B) below as curable compounds and further contains components (C) and (D) below as polymerization initiators: the component (A): a tri- or higher-functional alicyclic epoxy compound and/or a tri- or higher-functional oxetane compound; the component (B): a polyfunctional (meth)acrylic compound; the component (C): a photocationic polymerization initiator; and the component (D): a photoradical polymerization initiator.

In the present specification, "(meth)acrylic" means acrylic and/or methacrylic (either acrylic or methacrylic or both), and the same applies to (meth)acrylate and (meth)acryloyl.

### Component (A)

The component (A) according to an embodiment of the present invention is a tri- or higher-functional alicyclic epoxy compound and/or a tri- or higher-functional oxetane compound. However, the component (A) does not include a component (E) described below (a siloxane compound having two or more epoxy groups in a molecule).

The tri- or higher-functional alicyclic epoxy compound means a compound having three or more epoxy groups as functional groups in one molecule and having an alicyclic ring (aliphatic ring). The tri- or higher-functional alicyclic epoxy compound may have a functional group other than an epoxy group. Examples of the functional group other than an epoxy group include reactive functional groups, such as cationically polymerizable groups and radically polymerizable groups excluding an epoxy group, and non-reactive functional groups, such as alkyl groups.

Examples of the tri- or higher-functional alicyclic epoxy compound include a compound (i) having three or more epoxy groups (alicyclic epoxy groups) composed of two adjacent carbon atoms and an oxygen atom constituting an alicyclic ring and a compound (ii) having three or more epoxy groups directly bonded to an alicyclic ring by a single bond.

Examples of the compound (i) having three or more epoxy groups (alicyclic epoxy groups) composed of two adjacent carbon atoms and an oxygen atom constituting an alicyclic ring include a compound represented by Formula (a-1) below and a compound represented by Formula (a-2) below.

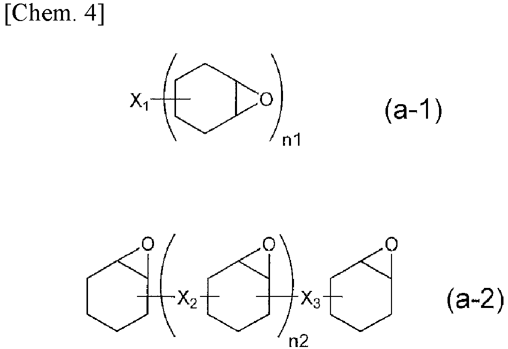

In Formula (a-1) and Formula (a-2), n1 represents an integer of 3 or greater, and n2 represents an integer of 1 or greater. X₁, X₂, and X₃ represent linking groups (divalent groups having one or more atoms) that may have a substituent. Here, X₂ and X₃ in Formula (a-2) may be identical or different. In addition, when n2 is 2 or greater, n2 X₂s each may be identical or different.

Here, n1 is any integer of 3 or greater and not particularly limited but is preferably, for example, from 3 to 15, more preferably from 3 to 9, even more preferably from 3 to 8, and particularly preferably from 3 to 6. In addition, n2 is any integer of 1 or greater and not particularly limited but is preferably, for example, from 1 to 10, more preferably from 1 to 6, and even more preferably from 1 to 4. With n1 and n2 within the above ranges, the resulting resin composition tends to have excellent coating properties.

Examples of the substituent that the linking groups may have include an alkyl group having from 1 to 6 carbon atoms, an aryl group having from 6 to 10 carbon atoms, a hydroxy group, an amino group, a nitro group, a cyano group, and a halogen atom. Examples of the alkyl group having from 1 to 6 carbon atoms may include a linear or branched alkyl group, such as a methyl group, an ethyl group, a propyl group, an isopropyl group, a butyl group, an isobutyl group, an s-butyl group, a t-butyl group, a pentyl group, and hexyl group. Examples of the aryl group having from 6 to 10 carbon atoms may include a phenyl group and a naphthyl group.

Examples of the linking group include a divalent hydrocarbon group, a carbonyl group, an ether bond, an ester bound, a carbonate bond, an amide bond, and a group in which a plurality of them are linked, and preferably include a group containing a divalent hydrocarbon group and an ester bond. Examples of the divalent hydrocarbon group include a linear or branched alkylene group and a divalent alicyclic hydrocarbon group. Examples of the linear or branched alkylene group include a linear or branched alkylene group having from 1 to 18 (preferably from 2 to 12 and more preferably from 3 to 6) carbon atoms, such as a methylene group, a methylmethylene group, a dimethylmethylene group, an ethylene group, a propylene group, a butylene group, and a trimethylene group. Examples of the divalent alicyclic hydrocarbon group include a cycloalkylene group having from 3 to 18 (preferably from 4 to 12 and more preferably from 5 to 6) carbon atoms (including a cycloalkylidene group), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

A substituent, such as an alkyl group (e.g., an alkyl group having from 1 to 6 carbon atoms) may be bonded to one or more of the carbon atoms constituting the cyclohexane ring (cyclohexene oxide group) in Formula (a-1) and Formula (a-2).

Representative examples of the compounds represented by Formula (a-1) and Formula (a-2) include compounds represented by Formula (a-3) and Formula (a-4) below, where n3 to n8 each are identical or different and represent an integer of 1 to 30, preferably from 1 to 20 more preferably from 1 to 10. Examples of a specific product include an alicyclic epoxy compound, such as butanetetracarboxylate tetra(3,4-epoxycyclohexylmethyl)-modified ε-caprolactone (e.g., trade name "Epolead GT401" available from Daicel Corporation).

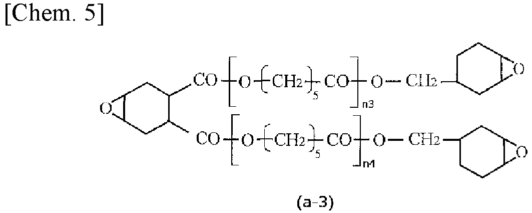

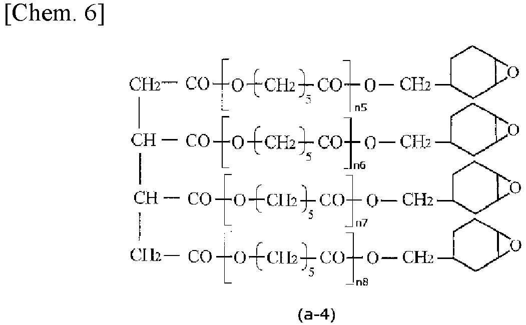

Examples of the compound (ii) having three or more epoxy groups directly bonded to an alicyclic ring by a single bond include a compound represented by Formula (a') below.

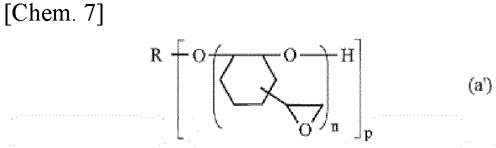

In Formula (a'), R is a group (p-valent organic group) obtained by removing p hydroxy groups (-OH) from a structural formula of a p-hydric alcohol, and p and n each represent a natural number. Examples of the p-hydric alcohol [R-(OH)ₚ] include a polyhydric alcohol (preferably a polyhydric alcohol having from 1 to 15 carbon atoms), such as 2,2-bis(hydroxymethyl)-1-butanol. Here, p is preferably from 1 to 6, and n is preferably from 1 to 30. When p is 2 or greater, n in a group in each square bracket (outer parenthesis) may be identical or different. Here, p and n satisfy a condition that groups in the square brackets (outer parentheses) are three or more. Examples of the compound represented by Formula (a') specifically include 1,2-epoxy-4-(2-oxiranyl)cyclohexane adduct of 2,2-bis(hydroxymethyl)-1-butanol (e.g., such as trade name "EHPE 3150" available from Daicel Corporation).

The tri- or higher-functional oxetane compound means a compound having three or more oxetanyl groups as functional groups in one molecule. The tri- or higher-functional oxetane compound may have a functional group other than an oxetanyl group. Examples of the functional group other than an oxetanyl group include reactive functional groups, such as cationically polymerizable groups and radically polymerizable groups excluding an oxetanyl group, and non-reactive functional groups, such as alkyl groups. However, the tri- or higher-functional oxetane compound does not include a compound corresponding to the tri- or higher-functional alicyclic epoxy compound.

Examples of the tri- or higher-functional oxetane compound include an oxetanated compound of a resin having three or more hydroxy groups, such as a novolac resin, poly(p-hydroxystyrene), a calixarene, a calixresorcinarene, or silsesquioxane; and a resin containing an unsaturated monomer having an oxetanyl group (e.g., an oxetanyl group-containing (meth)acrylate) as a constituent unit. Examples of the tri- or higher-functional oxetane compound specifically include Aron Oxetane PNOX-1009 and OX-SC (available from Toagosei Co., Ltd.).

### Component (B)

The component (B) in an embodiment of the present invention is a polyfunctional (meth)acrylic compound and a radically curable compound having two or more (meth)acryloyl groups in one molecule. However, compounds corresponding to the component (A) are excluded.

The molecular weight of the polyfunctional (meth)acrylic compound [the weight average molecular weight (based on the polystyrene calibration by GPC) when the polyfunctional (meth)acrylic compound is an oligomer or a polymer] is not particularly limited but is less than 5000, preferably from 2000 to 100, more preferably from 1000 to 200, and particularly preferably from 500 to 250. With the molecular weight of the polyfunctional (meth)acrylic compound within the above ranges, the resulting resin composition tends to have excellent in coating properties.

The number (total number) of the (meth)acryloyl group contained in a molecule of the polyfunctional (meth)acrylic compound is 2 or more and not particularly limited, but the lower limit is preferably 3 and more preferably 4. In addition, the upper limit is, for example, 15, preferably 12, and more preferably 10.

Examples of the polyfunctional (meth)acrylic compound include aliphatic (meth)acrylates, alicyclic (meth)acrylates, and aromatic (meth)acrylates. In an embodiment of the present invention, among them, aliphatic (meth)acrylates (e.g., linear or branched aliphatic (meth)acrylates) are preferred in terms of non-coloring properties of the cured product.

Specifically, examples of the polyfunctional (meth)acrylic compound include bifunctional (meth)acrylates, such as 2-hydroxy-3-(meth)acryloyloxypropyl (meth)acrylate, tricyclodecane dimethanol di(meth)acrylate, glycerin di(meth)acrylate, ethylene glycol di(meth)acrylate, diethylene glycol di(meth)acrylate, triethylene glycol di(meth)acrylate, tetraethylene glycol di(meth)acrylate, propylene glycol di(meth)acrylate, dipropylene glycol di(meth)acrylate, neopentyl glycol di(meth)acrylate, 1,4-butanediol di(meth)acrylate, 1,6-hexanediol di(meth)acrylate, 1,9-nonanediol di(meth)acrylate, 1,10-decanediol di(meth)acrylate, 9,9-bis[4-(2-(meth)acryloyloxyethoxy)phenyl]fluorene, 2,2-bis[4-((meth)acryloyloxydiethoxy)phenyl]propane, and derivatives thereof; tri- or higher-functional (meth)acrylates, such as ethoxylated isocyanurate tri(meth)acrylate, ε-caprolactone-modified tris(2-(meth)acryloyloxyethyl)isocyanurate, glycerin tri(meth)acrylate, ethoxylated glycerin tri(meth)acrylate, propoxylated glycerin tri(meth)acrylate, pentaerythritol tri(meth)acrylate, trimethylolpropane tri(meth)acrylate, tri(meth)acrylate of 3 mol ethylene oxide adduct of trimethylolpropane, tri(meth)acrylate of 3 mol propylene oxide adduct of trimethylolpropane, tri(meth)acrylate of 6 mol ethylene oxide adduct of trimethylolpropane, tri(meth)acrylate of 6 mol propylene oxide adduct of trimethylolpropane, ditrimethylol propane tetra(meth)acrylate, ethoxylated pentaerythritol tetra(meth)acrylate, pentaerythritol tetra(meth)acrylate, dipentaerythritol poly(meth)acrylate (e.g., such as dipentaerythritol hexa(meth)acrylate and hexa(meth)acrylate of caprolactone adduct of dipentaerythritol), and derivatives thereof, polyester (meth)acrylate, polyether (meth)acrylate, acryl (meth)acrylate, urethane (meth)acrylate, epoxy (meth)acrylate, polyalkadiene (meth)acrylate (e.g., such as polybutadiene (meth)acrylate), melamine (meth)acrylate, and polyacetal (meth)acrylate.

Commercially available polyfunctional (meth)acrylic compounds can be used, and examples of the product include pentaerythritol (tri/tetra)acrylate (a mixture of pentaerythritol triacrylate and pentaerythritol tetraacrylate, product name "PETIA" available from Daicel-Allnex Ltd.).

### Component (C)

The component (C) in an embodiment of the present invention is a photocationic polymerization initiator. The photocationic polymerization initiator is a compound that initiates curing reaction of the cationically polymerizable group in the resin composition by generating an acid upon irradiation with light and is composed of a cationic moiety that absorbs light and an anionic moiety that serves as a source for generating the acid.

Examples of the photocationic polymerization initiator include diazonium salt-based compounds, iodonium salt-based compounds, sulfonium salt-based compounds, phosphonium salt-based compounds, selenium salt-based compounds, oxonium salt-based compounds, ammonium salt-based compounds, and bromine salt-based compounds.

Among them, use of a sulfonium salt-based compound is preferred in that it can form a cured product excellent in curability. Examples of the cationic moiety of the sulfonium salt-based compound include arylsulfonium ions (in particular, triarylsulfonium ions), such as a (4-hydroxyphenyl)methylbenzylsulfonium ion, a triphenyl sulfonium ion, a diphenyl[4-(phenylthio)phenyl]sulfonium ion, a 4-(4-biphenylthio)phenyl-4-biphenylylphenylsulfonium ion, and a tri-p-tolylsulfonium ion.

Examples of the anionic moiety of the photocationic polymerization initiator include [(Y)ₛB(Phf)₄₋ₛ]⁻ (where Y represents a phenyl group or a biphenylyl group, Phf represents a substituted phenyl group in which at least one of hydrogen atoms is replaced with at least one selected from a perfluoroalkyl group, a perfluoroalkoxy group, and a halogen atom, and s is an integer of 0 to 3.), BF₄⁻, [(Rf)ₜPF₆₋ₜ]⁻ (where Rf represents a substituted alkyl group in which 80% or more of hydrogen atoms are replaced with fluorine atoms, and t represents an integer of 0 to 5.), AsF₆⁻, SbF₆⁻, and SbF₅OH⁻.

Examples of the photocationic polymerization initiator that can be used include (4-hydroxyphenyl)methylbenzylsulfonium tetrakis(pentafluorophenyl)borate; 4-(4-biphenylylthio)phenyl-4-biphenylylphenylsulfonium tetrakis(pentafluorophenyl)borate; 4-(phenylthio)phenyldiphenylsulfonium phenyltris(pentafluorophenyl)borate; [4-(4-biphenylylthio)phenyl]-4-biphenylylphenylsulfonium phenyltris(pentafluorophenyl)borate; diphenyl[4-(phenylthio)phenyl]sulfonium tris(pentafluoroethyl)trifluorophosphate; diphenyl[4-(phenylthio)phenyl]sulfonium tetrakis(pentafluorophenyl)borate; diphenyl[4-(phenylthio)phenyl]sulfonium hexafluorophosphate; 4-(4-biphenylylthio)phenyl-4-biphenylylphenylsulfonium tris(pentafluoroethyl)trifluorophosphate; bis[4-(diphenylsulfonio)phenyl]sulfide phenyltris(pentafluorophenyl)borate; [4-(2-thioxanthonylthio)phenyl]phenyl-2-thioxanthonylsulfonium phenyltris(pentafluorophenyl)borate; 4-(phenylthio)phenyldiphenylsulfonium hexafluoroantimonate; and commercially available products under trade names, such as "Cyracure UVI-6970", "Cyracure UVI-6974", "Cyracure UVI-6990", and "Cyracure UVI-950" (these are available from Union Carbide Corporation, USA), "Irgacure 250", "Irgacure 261", and "Irgacure 264" (these are available from BASF), "CG-24-61" (available from Ciba-Geigy), "Optomer SP-150", "Optomer SP-151", "Optomer SP-170", and "Optomer SP-171" (these are available from Adeka Corporation), "DAICAT II" (available from Daicel Corporation), "UVAC 1590" and "UVAC 1591" (these are available from Daicel-Cytec Co., Ltd.), "CI-2064", "CI-2639", "CI-2624", "CI-2481", "CI-2734", "CI-2855", "CI-2823", "CI-2758", and "CIT-1682" (these are available from Nippon Soda Co., Ltd.), "PI-2074" (tetrakis(pentafluorophenyl)borate tricumyliodonium salt, available from Rhodia), "FFC 509" (available from 3M), "BBI-102", "BBI-101", "BBI-103", "MPI-103", "TPS-103", "MDS-103", "DTS-103", "NAT-103", and "NDS-103" (these are available from Midori Kagaku Co., Ltd.), "CD-1010", "CD-1011", and "CD-1012" (these are available from Sartomer, USA), and "CPI-100P" and "CPI-101A" (these are available from San-Apro Ltd.).

### Component (D)

The component (D) in an embodiment of the present invention is a photoradical polymerization initiator. The photoradical polymerization initiator is a compound that initiates curing reaction of the radically polymerizable group in the resin composition by generating a radical upon irradiation with light, and examples of the photoradical polymerization initiator include benzophenone; acetophenone benzyl; benzyldimethyl ketone; benzoin; benzoin methyl ether; benzoin ethyl ether; benzoin isopropyl ether; dimethoxyacetophenone; dimethoxy phenylacetophenone; diethoxyacetophenone; diphenyl disulfite; methyl o-benzoylbenzoate; ethyl 4-dimethylaminobenzoate (such as trade name "Kayacure EPA" available from Nippon Kayaku Co., Ltd.); 2,4-diethylthioxanthone (such as trade name "Kayacure DETX" available from Nippon Kayaku Co., Ltd.); 2-methyl-1-[4-(methyl)phenyl]-2-morpholino-propanone-1 (such as trade name "Irgacure 907" available from BASF); 1-hydroxycyclohexyl phenyl ketone (such as trade name "Irgacure 184" available from BASF); 2-amino-2-benzoyl-1-phenyl alkane compounds, such as 2-dimethylamino-2-(4-morpholino)benzoyl-1-phenylpropane; amino benzene derivatives, such as tetra(t-butylperoxy carbonyl) benzophenone, benzil, 2-hydroxy-2-methyl-1 -phenyl-propan-1-one, and 4,4'-bis(diethylamino)benzophenone; imidazole compounds, such as 2,2'-bis(2-chlorophenyl)-4,5,4',5'-tetraphenyl-1,2'-biimidazole (such as trade name "B-CIM" available from Hodagaya Chemical Co., Ltd.); halomethylated triazine compounds, such as 2,6-bis(trichloromethyl)-4-(4-methoxynaphthalen-1-yl)-1,3,5-triazine; and halomethyl oxadiazole compounds, such as 2-trichloromethyl-5-(2-benzofuran2-yl-ethenyl)-1,3,4-oxadiazole.

### Component (E)

The resin composition according to an embodiment of the present invention may contain, as a component (E), a siloxane compound having two or more epoxy groups in a molecule. The siloxane compound is a compound having two or more epoxy groups and having a backbone composed of a siloxane bond (-Si-O-Si-). The siloxane backbone (Si-O-Si backbone) in the siloxane compound is not particularly limited, but examples of the siloxane backbone include cyclic siloxane backbones; and polysiloxane backbones, such as linear silicones, and cage or ladder polysilsesquioxanes. Among them, the siloxane backbone is preferably a cyclic siloxane backbone and a linear silicone backbone in terms of improving the crack resistance of the cured product. That is, the siloxane compound is preferably a cyclic siloxane having two or more epoxy groups in a molecule, and a linear silicone having two or more epoxy groups in a molecule.

When the siloxane compound is a cyclic siloxane having two or more epoxy groups in a molecule, the number of Si-O units forming the siloxane ring (the number is equal to the number of silicon atoms forming the siloxane ring) is not particularly limited but is preferably from 2 to 12 and more preferably from 4 to 8 in terms of improving the crack resistance of the cured product.

The weight average molecular weight of the siloxane compound is not particularly limited but is preferably from 100 to 3000 and more preferably from 180 to 2000 in terms of improving the crack resistance of the cured product. The weight average molecular weight of the siloxane compound is calculated from the molecular weight based on the standard polystyrene calibration as measured by gel permeation chromatography (GPC).

The number of epoxy groups contained in a molecule of the siloxane compound is 2 or more and not particularly limited but is preferably from 2 to 4 (2, 3, or 4) in terms of improving the crack resistance of the cured product.

The epoxy equivalent weight of the siloxane compound is not particularly limited but is preferably from 180 to 2000, more preferably from 180 to 1500, and even more preferably from 180 to 1000 in terms of improving the crack resistance of the cured product. The epoxy equivalent weight is a value measured in accordance with JIS K7236.

The epoxy group contained in the siloxane compound is not particularly limited but is preferably an alicyclic epoxy group and, among them, particularly preferably a cyclohexene oxide group in terms of improving the crack resistance of the cured product.

Examples of the siloxane compound include a compound represented by Formula (a) below.

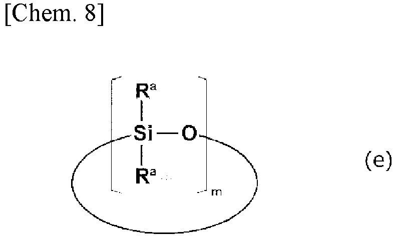

In Formula (e), R^{a}s are identical or different and represent a group containing an epoxy group, or an alkyl group. However, at least two (e.g., from 2 to 4) of R^{a}s in Formula (e) are groups containing an epoxy group. The group containing an epoxy group is a group containing at least one epoxy group (oxirane ring), and examples of the group include a group in which at least one double bond contained in a linear or branched aliphatic hydrocarbon group having a carbon-carbon unsaturated double bond, such as an alkenyl group, is epoxidized; and a group in which at least one double bond contained in a cyclic aliphatic hydrocarbon group having a carbon-carbon unsaturated double bond (e.g., such as a cycloalkenyl group; and a cycloalkenylalkyl group, such as a cyclohexenylethyl group) is epoxidized. More specifically, examples of the group containing an epoxy group include a 1,2-epoxyethyl group (epoxy group), a 1,2-epoxypropyl group, a 2,3-epoxypropyl group (glycidyl group), a 2,3-epoxy-2-methylpropyl group (methylglycidyl group), a 3,4-epoxybutyl group, a 3-glycidyloxypropyl group, a 3,4-epoxycyclohexylmethyl group, and a 2-(3,4-epoxycyclohexyl)ethyl group. Among them, the group containing an epoxy group is preferably a group in which at least one double bond contained in an aliphatic hydrocarbon group having a carbon-carbon unsaturated double bond is epoxidized. Examples of the alkyl group include linear or branched alkyl groups having from 1 to 20 carbon atoms, such as a methyl group, an ethyl group, a propyl group, an isopropyl group, a butyl group, a hexyl group, an octyl group, an isooctyl group, a decyl group, and a dodecyl group. Among them, a linear or branched alkyl group having from 1 to 10 carbon atoms is preferred.

In Formula (e), m represents an integer of 2 to 12. In particular, m is preferably from 4 to 8 and more preferably from 4 or 5 in terms of improving the crack resistance of the cured product.

Examples of the siloxane compound more specifically include 2,4-di[2-(3-{oxabicyclo[4.1.0]heptyl})ethyl]-2,4,6,6,8,8-hexamethyl-cyclotetrasiloxan e, 4,8-di[2-(3-{oxabicyclo[4.1.0]heptyl})ethyl]-2,2,4,6,6,8-hexamethyl-cyclotetrasiloxan e, 2,4-di[2-(3-{oxabicyclo[4.1.0]heptyl})ethyl]-6,8-dipropyl-2,4,6,8-tetramethyl-cyclote trasiloxane, 4,8-di[2-(3-{oxabicyclo[4.1.0]heptyl})ethyl]-2,6-dipropyl-2,4,6,8-tetramethyl-cyclote trasiloxane, 2,4,8-tri[2-(3-{oxabicyclo[4.1.0]heptyl})ethyl]-2,4,6,6,8-pentamethyl-cyclotetrasiloxa ne, 2,4,8-tri[2-(3-{oxabicyclo[4.1.0]heptyl})ethyl]-6-propyl-2,4,6,8-tetramethyl-cyclotetr asiloxane, 2,4,6,8-tetra[2-(3-{oxabicyclo[4.1.0]heptyl})ethyl]-2,4,6,8-tetramethyl-cyclotetrasilox ane, and silsesquioxane having two or more epoxy groups in a molecule. Even more specifically, examples of the siloxane compound include cyclic siloxanes having two or more epoxy groups in a molecule represented by formulas below.

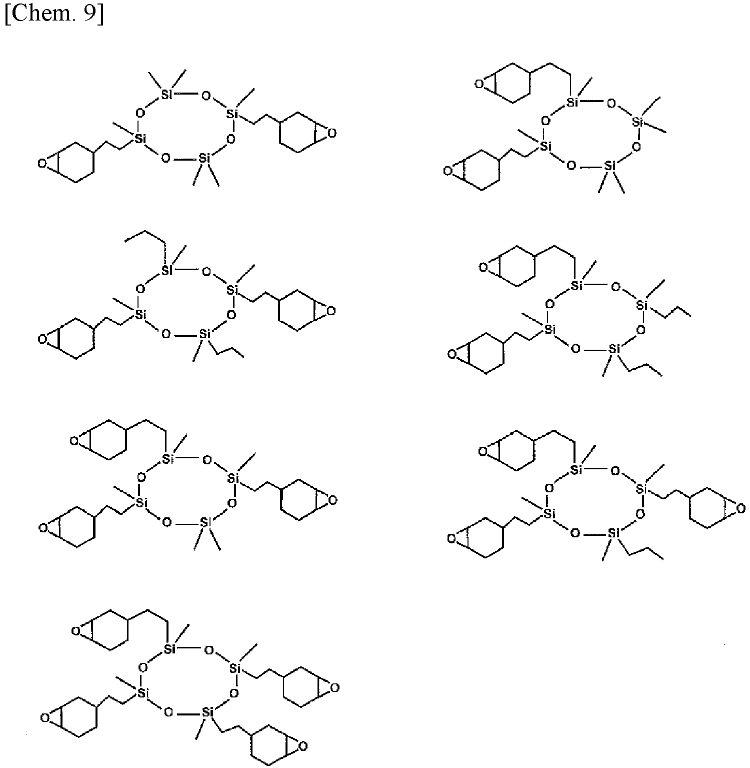

In addition, examples of the siloxane compound that can be used also include an alicyclic epoxy group-containing silicone resin described in JP 2008-248169 A or an organopolysilsesquioxane resin having at least two epoxy functional groups in one molecule described in JP 2008-019422 A.

In the resin composition according to an embodiment of the present invention, one type of the siloxane compound can be used alone, or two or more types can be used in combination.

The siloxane compound are, for example, cyclic siloxanes having two or more epoxy groups in a molecule, which are commercially available under trade names, such as "X-40-2678", "X-40-2670", and "X-40-2720" (these are available from Shin-Etsu Chemical Co., Ltd.). In addition, the siloxane compound can be produced by a well-known or commonly used method.

### Additional component

The resin composition according to an embodiment of the present invention may contain an additional component in addition to the components described above provided that it does not impair the effects of the present invention. The resin composition may contain, for example, a curable compound (which may be hereinafter referred to as the "additional curable compound") other than the components (A), (B), and (E). In addition, the resin composition may contain an additive of various types (which may be hereinafter referred to as the "additional additive") other than the components (C) and (D).

Examples of the additional curable compound include monofunctional or bifunctional alicyclic epoxy compounds, epoxy compounds other than alicyclic epoxy compounds, and monofunctional (meth)acrylic compounds. Examples of the monofunctional or bifunctional alicyclic epoxy compounds include a compound represented by Formula (f) below.

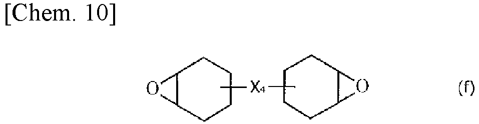

In Formula (f), X₄ represents a linking group (a divalent group having one or more atoms). Examples of the linking group include a divalent hydrocarbon group, a carbonyl group, an ether bond, an ester bound, a carbonate bond, an amide bond, and a group in which a plurality of them are linked. A substituent, such as an alkyl group (e.g., an alkyl group having from 1 to 6 carbon atoms) may be bonded to one or more of the carbon atoms constituting the cyclohexane ring (cyclohexene oxide group) in Formula (f).

Examples of the divalent hydrocarbon group include a linear or branched alkylene group and a divalent alicyclic hydrocarbon group. Examples of the linear or branched alkylene group include a linear or branched alkylene group having from 1 to 18 carbon atoms, such as a methylene group, a methylmethylene group, a dimethylmethylene group, an ethylene group, a propylene group, and a trimethylene group. Examples of the divalent alicyclic hydrocarbon group include a cycloalkylene group having from 3 to 18 carbon atoms (including a cycloalkylidene group), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Representative examples of the compound represented by Formula (f) include (3,4,3',4'-diepoxy)bicyclohexyl, bis(3,4-epoxycyclohexylmethyl)ether, 1,2-epoxy-1,2-bis(3,4-epoxycyclohexan-1-yl)ethane, 2,2-bis(3,4-epoxycyclohexan-1-yl)propane, 1,2-bis(3,4-epoxycyclohexan-1-yl)ethane, and compounds represented by Formulas (f-1) to (f-8) below. L in Formula (f-5) below is an alkylene group having from 1 to 8 carbon atoms and, among them, preferably a linear or branched alkylene group having from 1 to 3 carbon atoms, such as a methylene group, an ethylene group, a propylene group, or an isopropylene group. In Formulas (f-5) and (f-7) below, n9 and n10 each represent an integer from 1 to 30.

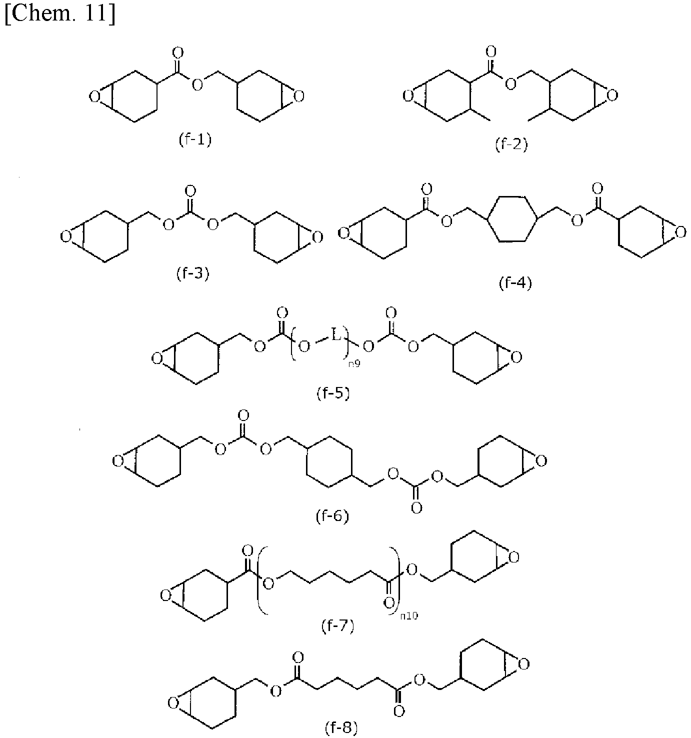

Examples of the additional additive include polyhydric alcohols, curing auxiliary agents, organosiloxane compounds, metal oxide particles, rubber particles, defoaming agents, silane coupling agents, fillers, plasticizers, leveling agents, antistatic agents, releasing agents, surfactants, flame retardants, colorants, antioxidants, ultraviolet absorbers, ion adsorbers, and fluorescents.

In addition, to the resin composition according to an embodiment of the present invention, a solvent can be appropriately added according to coating conditions. Examples of the solvent include butyl acetate, methyl ethyl ketone, and 1-methoxy-2-propyl acetate. One type of these solvents can be used alone, or two or more types can be used in combination.

The resin composition according to an embodiment of the present invention can be prepared by stirring and mixing the components described above in a state where the components are heated as necessary. For the stirring and mixing, a well-known or commonly used stirring and mixing means can be used, for example, including a mixer of various types, such as a dissolver and a homogenizer; a kneader; a roll; a bead mill; and a rotation/revolution stirring apparatus. In addition, after the stirring and mixing, the mixture may be defoamed under vacuum. The resin composition according to an embodiment of the present invention may be a one-part composition, which is a composition containing the components described above mixed in advance and used as is, or may be a multi-part (e.g., two-part) composition, which is used by mixing two or more separated components (each component may be a mixture of two or more components) in predetermined proportions before use.

The resin composition according to an embodiment of the present invention contains, as the component (A), one or more types of a tri- or higher-functional alicyclic epoxy compound and/or a tri- or higher-functional oxetane compound. A content of the component (A) is not particularly limited but is, for example, from 1 to 75 wt.% of a total amount of curable compounds contained in the resin composition according to an embodiment of the present invention. The upper limit is, for example, preferably 70 wt.%, more preferably 60 wt.%, even more preferably 50 wt.%, particularly preferably 40 wt.%, and most preferably 35 wt.%. The lower limit is preferably 3 wt.%, more preferably 5 wt.%, even more preferably 10 wt.%, particularly preferably 20 wt.%, and most preferably 30 wt.%. The content of the component (A) within the above range tends to provide excellent scratch resistance, bending resistance, and crack resistance. The content of the component (A) is, for example, preferably from 10 to 75 wt.%, more preferably from 20 to 75 wt.%, and even more preferably from 30 to 75 wt.% of a total amount of curable compounds contained in the resin composition in terms of improving the bending resistance and crack resistance.

The resin composition according to an embodiment of the present invention contains, as the component (B), one or more types of polyfunctional (meth)acrylic compounds. A content of the component (B) is not particularly limited but is, for example, from 25 to 99 wt.% of a total amount of curable compounds contained in the resin composition according to an embodiment of the present invention. The upper limit is preferably 97 wt.%, more preferably 95 wt.%, even more preferably 90 wt.%, particularly preferably 80 wt.%, and most preferably 70 wt.%. The lower limit is preferably 30 wt.%, more preferably 40 wt.%, even more preferably 50 wt.%, particularly preferably 60 wt.%, and most preferably 65 wt.%. The content of the component (B) within the above range tends to provide excellent scratch resistance, bending resistance, and crack resistance. The content of the component (B) is, for example, preferably from 25 to 90 wt.%, more preferably from 25 to 80 wt.%, and even more preferably from 25 to 70 wt.% of a total amount of curable compounds contained in the resin composition in terms of improving the bending resistance and crack resistance.

A total content of the component (A) and the component (B) in the resin composition according to an embodiment of the present invention is not particularly limited but is, for example, from 50 to 100 wt.% of a total amount of curable compounds contained in the resin composition according to an embodiment of the present invention. The upper limit is preferably 99 wt.%, more preferably 95 wt.%, and particularly preferably 90 wt.%. The lower limit is preferably 60 wt.%, more preferably 70 amount%, and particularly preferably 80 wt.%.

A ratio of the contents of the component (A) and the component (B) (component (A)/component (B)) in the resin composition according to an embodiment of the present invention is not particularly limited but is, for example, from 1/99 to 75/25. The upper limit is preferably 70/30, more preferably 60/40, even more preferably 50/50, and particularly preferably 40/60. The lower limit is preferably 3/97, more preferably 5/95, even more preferably 10/90, particularly preferably 20/80, and most preferably 30/70.

Control of the contents and the ratio of the components (A) and (B) in the above range provides an effect of improving the bending resistance and crack resistance while maintaining the scratch resistance.

The resin composition according to an embodiment of the present invention contains, as the component (C), one or more types of photocationic polymerization initiators. A content of the component (C) is, for example, from 0.05 to 5 parts by weight relative to 100 parts by weight of curable compounds contained in the resin composition according to an embodiment of the present invention. The content of the component (C) below the above range would cause failure in curing. On the other hand, the content of the component (C) exceeding the above range would be apt to cause coloration of the cured product.

The resin composition according to an embodiment of the present invention contains, as the component (D), one or more types of photoradical polymerization initiators. A content of the component (D) is, for example, from 1 to 10 parts by weight relative to 100 parts by weight of curable compounds contained in the resin composition according to an embodiment of the present invention. The content of the component (D) below the above range would cause failure in curing. On the other hand, the content of the component (D) exceeding the above range would be apt to cause coloration of the cured product.

In the resin composition according to an embodiment of the present invention containing, as the component (E), the siloxane compound having two or more epoxy groups in a molecule, the content of the siloxane compound is not particularly limited but is, for example, preferably from 0.1 to 30 wt.%, more preferably from 0.5 to 20 wt.%, and even more preferably from 1.0 to 10 wt.% of a total amount of curable compounds contained in the resin composition of an embodiment of the present invention. Control of the content of the siloxane compound in the above range tends to improve the crack resistance of the cured product.

A content of the additional curable compound (e.g., a compound represented by Formula (f)) can be appropriately set according to the application but is, for example, not greater than 50 wt.%, preferably not greater than 30 wt.%, more preferably not greater than 20 wt.%, and particularly preferably not greater than 10 wt.% relative to a total amount of curable compounds contained in the resin composition according to an embodiment of the present invention.

The content of the additional additive can be appropriately set according to the application but is, for example, not greater than 40 parts by weight, preferably not greater than 20 parts by weight, more preferably not greater than 10 parts by weight, and particularly preferably not greater than 5 parts by weight relative to 100 parts by weight of curable compounds contained in the resin composition according to an embodiment of the present invention.

The resin composition according to an embodiment of the present invention can be cured in a very short time by irradiation with an active energy ray, such as an ultraviolet light or an electron beam, after coating, providing a cured product having high hardness and excellent in scratch resistance and crack resistance. Examples of a light source used during the ultraviolet light irradiation include a high-pressure mercury-vapor lamp, an ultra-high-pressure mercury-vapor lamp, a carbon-arc lamp, a xenon lamp, or a metal halide lamp. The irradiation time depends on the type of the light source, the distance between the light source and the coated surface, and other conditions but is at most several tens of seconds and typically several seconds. Typically, an irradiation source with a lamp output of approximately from 80 to 300 W/cm is used. The UV irradiation dose is approximately from 50 to 3000 mJ/cm². For the electron beam irradiation, an electron beam with energy in a range from 50 to 1000 KeV is preferably used to provide an irradiation dose from 2 to 5 Mrad. After the irradiation with the active energy ray, heating (post curing) may be performed as necessary to promote the curing.

The cured product of the resin composition according to an embodiment of the present invention is excellent in scratch resistance, and the number of times of rubbing until a scratch is made in the test for evaluating scratch resistance described in Examples is, for example, not less than 300 times, preferably not less than 500 times, and particularly preferably not less than 1000 times.

The cured product of the resin composition according to an embodiment of the present invention has high hardness, and its pencil hardness is, for example, not lower than 2H.

The cured product of the resin composition according to an embodiment of the present invention is excellent in transparency, and its light transmittance (in terms of a thickness of 20 µm) of a light with a wavelength of 450 nm is, for example, not lower than 80%. The light transmittance can be measured, for example, using a spectrophotometer (e.g., trade name "UV-2400" available from Shimadzu Corporation).

### Hard coating film

A hard coating film according to an embodiment of the present invention includes, in at least a portion thereof, one or more hard coating layers formed of the cured product of the resin composition according to an embodiment of the present invention.

The hard coating film according to an embodiment of the present invention is preferably a laminate having at least one substrate layer and at least one hard coating layer. As a substrate forming the substrate layer, a plastic film, such as triacetyl cellulose (TAC) and polyethylene terephthalate (PET), can be suitably used.

The hard coating film according to an embodiment of the present invention can be produced, for example, by applying the resin composition for forming a hard coating layer according to an embodiment of the present invention onto at least one surface of the substrate and curing the resin composition.

The thickness of the hard coating layer is, for example, approximately from 3 to 50 µm. In addition, the thickness of the entire hard coating film is, for example, approximately from 30 to 300 µm.

The hard coating film according to an embodiment of the present invention has high hardness and is excellent in scratch resistance and crack resistance. Thus, the hard coating film can be suitably used for applications for adhering it to and protecting touch screens and displays of electronic devices, such as liquid crystal televisions, liquid crystal displays, notebook-size personal computers, mobile displays, tablet PCs, and smartphones. That is, the hard coating film according to an embodiment of the present invention can be suitably used as a protective film for touch screens and displays of electronic devices.

### Electronic device

In the electronic device according to an embodiment of the present invention, at least a portion of a surface of the electronic device includes a hard coating layer formed of the cured product of the resin composition according to an embodiment of the present invention.

Examples of the electronic device according to an embodiment of the present invention include liquid crystal televisions, liquid crystal displays, notebook-size personal computers, mobile displays, tablet PCs, and smartphones.

The electronic device according to an embodiment of the present invention can be produced, for example, by directly applying the resin composition according to an embodiment of the present invention onto a surface of the electronic device and curing the resin composition, or by adhering the hard coating film to a surface of the electronic device.

The electronic device according to an embodiment of the present invention has a structure in which a touch screen or a display is protected by a hard coating layer formed of a cured product of the resin composition according to an embodiment of the present invention and excellent in surface hardness and scratch resistance, and thus is resistant to a scratch or dirt and capable of maintaining high quality over a long period of time.

### Molded product

A molded product according to an embodiment of the present invention includes, in at least a portion of the molded product surface, a hard coating layer formed of a cured product of the resin composition according to an embodiment of the present invention.

Examples of the molded product according to an embodiment of the present invention include lenses, sensors, glass-alternative resins (or resin windows), and automobile components (e.g., interior components, such as gauge panels; exterior components, such as door handles and roof rails; and electrical components, such as headlight lenses).

The molded product according to an embodiment of the present invention can be produced, for example, by directly applying the resin composition according to an embodiment of the present invention onto a surface of the molded product and curing the resin composition, or by adhering the hard coating film to a surface of the molded product.

The molded product according to an embodiment of the present invention has a hard coating layer formed of a cured product of the resin composition according to an embodiment of the present invention and excellent in surface hardness and scratch resistance, and thus is resistant to a scratch or dirt and capable of maintaining high quality over a long period of time.

### Examples

Hereinafter, the present invention is described in more detail based on examples, but the present invention is not limited by these examples.

### Preparation of resin composition

The components were mixed in the blending proportions (in part by weight) shown in Table 1, stirred and defoamed using a rotation/revolution stirring apparatus (trade name "THINKY MIXER AR-250" available from Thinky Corporation), and a resin composition was obtained.

### Production of hard coating film

The resin composition obtained as described above was applied on a polycarbonate substrate with a thickness of 1 mm by a bar coater to make the film thickness after drying 25 µm, and a coating film was formed. Thereafter, the coating film was dried at 80°C for 1 minute and then irradiated with ultraviolet light (an irradiation dose is shown in Table 1) in a state where the coating film was placed in a well-closed container purged with nitrogen. The coating film was further post-cured (temperature and time are shown in Table 1), and a cured coating film was formed. A laminate (hard coating film (1)) having a structure of "a PC substrate/a cured product (the cured coating film)" thus obtained as described above was obtained.

Next, a laminate (hard coating film (2)) having a structure of "a PET substrate/a cured product (the cured coating film)" was obtained in the same manner as described above except for changing the polycarbonate substrate to a PET substrate with a thickness of 100 µm and changing the film thickness of the coating film to 15 µm.

Furthermore, a laminate (hard coating film (3)) having a structure of "a PC substrate/a cured product (the cured coating film)" was obtained in the same manner as described above except for changing the thickness of the polycarbonate substrate to 5 mm and changing the film thickness of the coating film to 40 µm.

In Comparative Example 3, a cured coating film was formed without post-curing.

### Pencil hardness (1)

Pencil hardness was evaluated in accordance with JIS K 5600.

First, the cured coating film surface of a sample for pencil hardness evaluation was scratched with a pencil with a certain hardness, and when no scratch was made, the cured coating film surface of the sample was scratched with a pencil with a hardness one grade higher. When it was observed that a scratch was made, the cured coating film surface of the sample was scratched again with a pencil with a hardness one grade lower, and it was observed whether a scratch was made. When it was observed that no scratch was made, it was observed again whether a scratch was made using a pencil with a hardness one grade higher. When reproducibility of two or more times was confirmed, the hardest hardness of the pencil that did not make a scratch was taken as the pencil hardness of the sample. The evaluation conditions are as follows.
Sample for evaluation: hard coating film (1)
Pencil for evaluation: a "pencil for pencil hardness test", available from Mitsubishi Pencil Co., Ltd.
Load: 750 gf
Scratch distance: not shorter than 50 mm
Scratch angle: 45°
Measurement environment: 23°C, 50% RH

### Pencil hardness (2)

Pencil hardness was evaluated by the same method as the pencil hardness (1) except for changing the sample for evaluation from the hard coating film (1) to the hard coating film (2).

### Scratch resistance

The cured coating film surface of the hard coating film (1) was rubbed with #0000 steel wool at a load of 500 g/cm², and scratch resistance was evaluated from the number of rubbing until a scratch was formed.

### Bending resistance (1)

In accordance with JIS K5600-5-1 (bending resistance (cylindrical mandrel method)), the hard coating film (2) was bent 10 times about a mandrel of 5 mm in diameter with the coated surface of the hard coating film (2) being inside. It was visually observed whether a crack occurred and evaluated according to the following criteria.
Excellent: No crack occurred
Good: From 1 to 2 fine cracks occurred
Marginal: From 3 to 5 cracks occurred
Poor: 6 or more cracks occurred

### Bending resistance (2)

Bending resistance was evaluated in the same manner as in the bending resistance (1) except for bending the hard coating film (2) with the coated surface being outside.

### Bending resistance (3)

Bending resistance was evaluated in the same manner as in the bending resistance (1) except for changing the diameter of the mandrel to 1 mm.

### Bending resistance (4)

Bending resistance was evaluated in the same manner as in the bending resistance (1) except for changing the diameter of the mandrel to 1 mm and bending the hard coating film (2) with the coated surface being outside.

### Crack resistance

The hard coating film (3) was subjected to 200 cycles of thermal shocks using a thermal shock tester, where one cycle includes exposing the film to an atmosphere at -40°C for 30 minutes and subsequently an atmosphere at 100°C for 30 minutes. Thereafter, presence or absence of a crack on the cured coating film surface of the hard coating film (3) was observed using a digital microscope (trade name "VHX-900" available from Keyence Corporation), and the crack resistance was evaluated according to the following criteria.
Good: No crack was present
Poor: A crack was present

**[Table 1]**

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Component (A) | Epolead GT-401 | 10 | 20 | | | 40 | 60 | | | |
| | EHPE3150 | | | 10 | 20 | | | | | |
| Additional curable compound | (3,4,3',4'-Diepoxy)bicyclohexyl | | | | | | | 10 | 20 | |
| Component (B) | PETIA | 90 | 80 | 90 | 80 | 60 | 40 | 90 | 80 | 100 |
| Component (C) | CPI-210S | 0.2 | 0.2 | 0.2 | 0.2 | 0.2 | 0.2 | 0.2 | 0.2 | |
| Component (D) | Irgacure 184 | 4 | 4 | 4 | 4 | 4 | 4 | 4 | 4 | 4 |
| Solvent | Butyl acetate | 30 | 30 | 30 | 30 | 30 | 30 | 30 | 30 | 30 |
| Irradiation dose of ultraviolet light | | 1000 mJ/cm² | 1000 mJ/cm² | 1000 mJ/cm² | 1000 mJ/cm² | 1000 mJ/cm² | 1000 mJ/cm² | 1000 mJ/cm² | 1000 mJ/cm² | 1000 mJ/cm² |
| Post curing temperature and time | | 80°C, 12 hours | 80°C, 12 hours | 80°C, 12 hours | 80°C, 12 hours | 80°C, 12 hours | 80°C, 12 hours | 80°C, 2 hours | 80°C, 2 hours | - |
| Pencil hardness (1) | | 2H | 2H | 2H | 2H | 1H | 1H | 2H | 2H | 2H |
| Pencil hardness (2) | | 3H | 3H | 3H | 3H | 3H | 3H | 4H | 4H | 4H |
| Scratch resistance | | 6000 times | 1000 times | 2000 times | 300 times | 200 times | 100 times | 700 times | 40 times | 5000 times |
| Bending resistance (1) | | Excellent | Excellent | Excellent | Excellent | Excellent | Excellent | Excellent | Excellent | Poor |
| Bending resistance (2) | | Excellent | Excellent | Excellent | Excellent | Excellent | Excellent | Poor | Poor | Poor |
| Bending resistance (3) | | Excellent | Excellent | Excellent | Excellent | Excellent | Excellent | Poor | Marginal | Poor |
| Bending resistance (4) | | Marginal | Good | Marginal | Good | Excellent | Excellent | Poor | Poor | Poor |
| Crack resistance | | Good | Good | Good | Good | Good | Good | Poor | Good | Poor |

As a result of the above, Examples 1 to 6 provided cured products having not only high hardness but also excellent scratch resistance, bending resistance, and crack resistance. Among them, cured products from Examples 5 and 6 were revealed to exhibit very high bending resistance.

Abbreviations in the table are described below.

### Component (A)

Epolead GT-401: Butanetetracarboxylate tetra(3,4-epoxycyclohexylmethyl)-modified ε-caprolactone, molecular weight of 789, available from Daicel Corporation
EHPE3150: 1,2-Epoxy-4-(2-oxiranyl)cyclohexane adduct of 2,2-bis(hydroxymethyl)-1-butanol, available from Daicel Corporation

### Additional curable compound

(3,4,3',4'-Diepoxy)bicyclohexyl, molecular weight of 194, available from Daicel Corporation

### Component (B)

PETIA: A mixture of pentaerythritol triacrylate and pentaerythritol tetraacrylate, molecular weight of 298/352, available from Daicel-Allnex Ltd.

### Component (C)

CPI-210S: Diphenyl[4-(phenylthio)phenyl]sulfonium tris(pentafluoroethyl)trifluorophosphate, available from San-Apro Ltd.

### Component (D)

Irgacure 184: 1-hydroxycyclohexyl phenyl ketone, available from BASF

To summarize the above, configurations of the present invention and variations thereof will be described below.
(1) A resin composition for forming a hard coating layer, the resin composition containing components (A) to (E) below:
   the component (A): a tri- or higher-functional alicyclic epoxy compound and/or a tri- or higher-functional oxetane compound;
   the component (B): a polyfunctional (meth)acrylic compound;
   the component (C): a photocationic polymerization initiator; and
   the component (D): a photoradical polymerization initiator.
(2) The resin composition for forming a hard coating layer according to (1), wherein a content of the component (A) is from 1 to 75 wt.% of a total amount of curable compounds contained in the resin composition; an upper limit of the content is preferably 70 wt.%, more preferably 60 wt.%, even more preferably 50 wt.%, particularly preferably 40 wt.%, and most preferably 35 wt.%; and a lower limit of the content is preferably 3 wt.%, more preferably 5 wt.%, even more preferably 10 wt.%, particularly preferably 20 wt.%, and most preferably 30 wt.%.
(3) The resin composition for forming a hard coating layer according to (1) or (2), wherein the component (A) contains, as the tri- or higher-functional alicyclic epoxy compound, at least one selected from the group consisting of: a compound represented by Formula (a-3) where n3 and n4 each are identical or different and represent an integer of 1 to 30; a compound represented by Formula (a-4) where n5, n6, n7, and n8 each are identical or different and represent an integer of 1 to 30; and a compound represented by Formula (a') where R is a group (p-valent organic group) obtained by removing p hydroxy groups (-OH) from a structural formula of a p-hydric alcohol, and p and n each represent a natural number.
(4) The resin composition for forming a hard coating layer according to any one of (1) to (3), wherein a number (total number) of (meth)acryloyl groups contained in a molecule of the polyfunctional (meth)acrylic compound is 2 or greater; a lower limit is preferably 3 and more preferably 4; and an upper limit is 15, preferably 12, and more preferably 10.
(5) The resin composition for forming a hard coating layer according to any one of (1) to (4), wherein the component (B) contains, as the polyfunctional (meth)acrylic compound, at least one selected from the group consisting of an aliphatic (meth)acrylate, an alicyclic (meth)acrylate, and an aromatic (meth)acrylate.
(6) The resin composition for forming a hard coating layer according to any one of (1) to (5), wherein a number (total number) of (meth)acryloyl groups contained in a molecule of the polyfunctional (meth)acrylic compound is 2 or greater; a lower limit is preferably 3 and more preferably 4; and an upper limit is 15, preferably 12, and more preferably 10.
(7) The resin composition for forming a hard coating layer according to any one of (1) to (6), further containing, as a component (E), a siloxane compound having two or more epoxy groups in a molecule.
(8) The resin composition for forming a hard coating layer according to any one of (1) to (7), wherein a content of the component (B) is from 25 to 99 wt.% of a total amount of curable compounds contained in the resin composition; an upper limit of the content is preferably 97 wt.%, more preferably 95 wt.%, even more preferably 90 wt.%, particularly preferably 80 wt.%, and most preferably 70 wt.%; and a lower limit of the content is preferably 30 wt.%, more preferably 40 wt.%, even more preferably 50 wt.%, particularly preferably 60 wt.%, and most preferably 65 wt.%.
(9) The resin composition for forming a hard coating layer according to any one of (1) to (8), wherein a total content of the component (A) and the component (B) is from 50 to 100 wt.% of a total amount of curable compounds contained in the resin composition; an upper limit of the total content is preferably 99 wt.%, more preferably 95 wt.%, and particularly preferably 90 wt.%; and a lower limit of the total content is preferably 60 wt.%, more preferably 70 wt.%, and particularly preferably 80 wt.%.
(10) The resin composition for forming a hard coating layer according to any one of (1) to (9), wherein a ratio of contents of the component (A) and the component (B) (component (A)/component (B)) is from 1/99 to 75/25; an upper limit of the ratio is preferably 70/30, more preferably 60/40, even more preferably 50/50, and particularly preferably 40/60; and a lower limit of the ratio is preferably 3/97, more preferably 5/95, even more preferably 10/90, particularly preferably 20/80, and most preferably 30/70.
(11) The resin composition for forming a hard coating layer according to any one of (1) to (10), wherein a content of the component (C) is from 0.05 to 5 parts by weight relative to 100 parts by weight of curable compounds contained in the resin composition.
(12) The resin composition for forming a hard coating layer according to any one of (1) to (11), wherein a content of the component (D) is from 1 to 10 parts by weight relative to 100 parts by weight of curable compounds contained in the resin composition.
(13) A hard coating film including a hard coating layer formed of a cured product of the resin composition for forming a hard coating layer described in any one of (1) to (12).
(14) An electronic device including a hard coating layer formed of a cured product of the resin composition for forming a hard coating layer described in any one of (1) to (12).
(15) A molded product including a hard coating layer formed of a cured product of the resin composition for forming a hard coating layer described in any one of (1) to (12).

### Industrial Applicability

The resin composition for forming a hard coating layer according to an embodiment of the present invention has the above constitution and thus is capable of form a hard coating layer having not only high hardness but also excellent scratch resistance, bending resistance, and crack resistance by irradiation with an active energy ray. In addition, use of the resin composition for forming a hard coating layer according to an embodiment of the present invention can provide a hard coating film, a molded product, and an electronic device including a hard coating layer having not only high hardness but also excellent scratch resistance, bending resistance, and crack resistance.

## Claims

1. A resin composition for forming a hard coating layer, the resin composition comprising components (A) to (D):
the component (A): a tri- or higher-functional alicyclic epoxy compound and/or a tri- or higher-functional oxetane compound;
the component (B): a polyfunctional (meth)acrylic compound;
the component (C): a photocationic polymerization initiator; and
the component (D): a photoradical polymerization initiator.

2. The resin composition for forming a hard coating layer according to claim 1, wherein a content of the component (A) is from 1 to 75 wt.% of a total amount of curable compounds contained in the resin composition.

3. The resin composition for forming a hard coating layer according to claim 1 or 2, wherein
the component (A) comprises, as the tri- or higher-functional alicyclic epoxy compound, at least one selected from the group consisting of:
a compound represented by Formula (a-3) 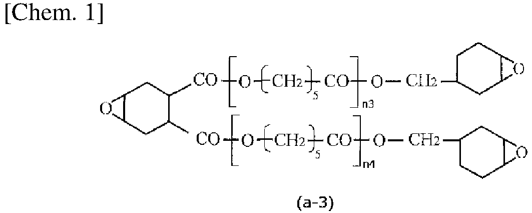 where n3 and n4 each are identical or different and represent an integer from 1 to 30;
a compound represented by Formula (a-4) 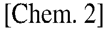 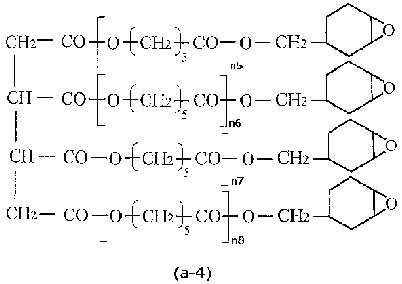 where n5, n6, n7, and n8 each are identical or different and represent an integer from 1 to 30; and
a compound represented by Formula (a') 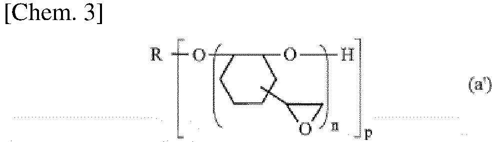 where R is a group (p-valent organic group) obtained by removing p hydroxy groups (-OH) from a structural formula of a p-hydric alcohol, and p and n each represent a natural number.

4. A hard coating film comprising a hard coating layer formed of a cured product of the resin composition for forming a hard coating layer described in any one of claims 1 to 3.

5. An electronic device comprising a hard coating layer formed of a cured product of the resin composition for forming a hard coating layer described in any one of claims 1 to 3.

6. A molded product comprising a hard coating layer formed of a cured product of the resin composition for forming a hard coating layer described in any one of claims 1 to 3.
